# EUROPEAN PATENT APPLICATION

(11) **EP 4 687 334 A1**
(43) Date of publication of application: **04.02.2026**
(21) Application number: 25192483.3
(22) Date of filing: 29.07.2025
(51) Int. Cl.: H04L 49/10, H04L 49/40, H04L 45/60

(54) **A NETWORK SWITCH WITH PACKET DATA ACCELERATION FOR LOW LATENCY**

(30) Priority: 31.07.2024 US 202418790624
(71) Applicant: Avago Technologies International Sales Pte. Limited, Singapore 768923 (SG)
(72) Inventor: Bansal, Ankit, Milpitas, 95035 (US); LakshmyGopalakrishnan, Manoj, Santa Clara, 95050 (US); Durve, Rahul, Cupertino, 95014 (US); Lau, Michael, Rockville, 20850 (US)
(74) Representative: Dilg, Haeusler, Schindelmann Patentanwaltsgesellschaft mbH

(57) **Abstract**

A network switch (100) comprises a first data path (10) configured to separate a header from a payload of an incoming packet, the first data path (10) is characterized by a reduced latency for cells of the payload without a first processing delay associated with the header in the second data path (30). The network switch (100) also includes a controller configured with a first control path to transmit a control bus carrying control signals for individual cells and a second control path to transmit a data bus carrying the header and the payload, wherein the control bus is transmitted before the data bus. The network switch (100) also includes a second data path (30) configured to receive the control bus and the data bus separately, and to store the cells temporarily for managing the timing of the cells and handling a second processing delay associated with the header in the second data path (30) before transmitting the packet.

## Description

### FIELD OF INVENTION

The subject technology is directed to network switches.

### BACKGROUND OF THE INVENTION

In Ethernet network switches, packets arrive at the line rate and then undergo various processing and forwarding steps before exiting the switch. During this process, the gap between fragments of the packet can change due to the internal operations of the switch. The last stage of the switch, which is responsible for transmitting the packet out, must account for any intra-packet delays. It can only start transmitting the packet after waiting for a sufficient amount of time following the start-of-packet (SOP) arrival. This ensures that the next fragment of the packet always arrives in time before the last accumulated fragment has been sent out. Failure to ensure this timing can result in an underrun, where a gap occurs in the line in the middle of a packet. An underrun leads to a packet drop, which is equivalent to a port failure.

As the internal processing complexity of switches increases, so do the internal delays. Consequently, the wait time before a packet can be transmitted out of the chip also increases, resulting in higher overall latency. This increased latency through the device makes the switch less competitive in the market, as lower latency is a critical factor for network performance. Thus, addressing the challenges of intra-packet delays and reducing the associated latency is essential for maintaining the efficiency and competitiveness of Ethernet network switches.

### BRIEF DESCRIPTION OF THE DRAWINGS

A further understanding of the nature and advantages of particular embodiments may be realized by reference to the remaining portions of the specification and the drawings, in which reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Figure 1 is a simplified block diagram of a network switch configured for low latency according to an embodiment of the subject technology.
Figure 2 is a simplified block diagram illustrating the functions of the network switch with packet data acceleration for achieving low latency according to an embodiment of the subject technology.
Figure 3 is a simplified block diagram illustrating the functions of an egress data path in the network switch according to an embodiment of the subject technology.
Figure 4 is a flow chart illustrating a method for reducing network switch latency according to an embodiment of the subject technology.

### DETAILED DESCRIPTION OF THE INVENTION

The subject technology provides a network switch for reducing latency by managing intra-packet delays. In an embodiment, the network switch includes an ingress data path having a bypass route for the payload cells to avoid an ingress processing delay for the packet header. The network switch also includes a traffic manager configured to transmit a control bus carrying control signals for individual cells before transmitting a data bus carrying the header and the payload. The network switch further includes an egress data path configured to store the cells of the payload temporarily to manage the timing of the cells and an egress processing delay to compensate for the jitter of the packet before transmitting the packet. There are other embodiments as well.

The following description is presented to enable one of ordinary skill in the art to make and use the invention and to incorporate it in the context of particular applications. Various modifications, as well as a variety of uses in different applications, will be readily apparent to those skilled in the art, and the general principles defined herein may be applied to a wide range of embodiments. Thus, the present invention is not intended to be limited to the embodiments presented but is to be accorded the widest scope consistent with the principles and novel features disclosed herein.

In the following detailed description, numerous specific details are set forth in order to provide a more thorough understanding of the present invention. However, it will be apparent to one skilled in the art that the present invention may be practiced without necessarily being limited to these specific details. In other instances, well-known structures and devices are shown in block diagram form, rather than in detail, in order to avoid obscuring the present invention.

The reader's attention is directed to all papers and documents which are filed concurrently with this specification and which are open to public inspection with this specification, and the contents of all such papers and documents are incorporated herein by reference. All the features disclosed in this specification, (including any accompanying claims, abstract, and drawings) may be replaced by alternative features serving the same, equivalent, or similar purpose unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

When an element is referred to herein as being "connected" or "coupled" to another element (which may include electrical or communicative connection or coupling for the purposes of data transmission), it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

Moreover, the terms left, right, front, back, top, bottom, forward, reverse, clockwise, and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and the use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require the selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

One general aspect of the subject technology includes a network switch with reduced latency during packet processing. The network switch includes a first data path configured to receive a packet and to separate a header from a payload of the packet, the first data path is characterized by a first latency for cells of the payload without a first processing delay associated with the header in the second data path. The switch also includes a controller comprising a first control path for transmitting via a control bus carrying control signals for the cells, the controller further comprises a second control path for transmitting via a data bus carrying the header and the payload, wherein the control bus is characterized by a higher priority than the data bus. The switch also includes a second data path configured to receive the control bus and the data bus separately, and to store the cells of the payload temporarily for managing timing of the cells and handling a second processing delay associated with the header in the second data path before transmitting the packet. Other embodiments of this aspect include corresponding computer systems, apparatus, and computer programs recorded on one or more computer storage devices, each configured to perform the actions of the methods.

Implementations may include one or more of the following features. The first data path is configured to: process the header to determine packet type and destination; and provide a route for initial (a first set of) cells containing header information around the first processing delay allowing the controller to process control signals associated with the header information earlier. For example, the term "initial cells" (or a first set of cells) refers to the first few segments or portions of a data packet that are processed or prioritized differently to expedite certain stages of packet handling within a network switch. The first set of cells may include a number of cells ranging from one to the total number of cells of the packet arriving at the first data path. The first data path is configured to merge the first set of cells with subsequent cells having the first processing delay at an input of the controller. The control bus carries control signals sent from the controller to the first data path for managing the storage of the cells of the payload in buffers. As an example, the term "controller" refers to hardware-based control units, software modules, or a combination thereof, that perform tasks such as routing, traffic management, jitter compensation, and others. The second data path is configured to receive data from the control bus with control signals earlier than the data bus to set up timing and order for the cells. The second data path may include a data buffer configured to temporarily store the packet including the header and the cells of the payload. The second data path is configured to conduct an accumulation of the cells by retrieving the cells from the data buffer based on a data read request signal sent via the control bus. The second data path is configured to manage the accumulation of the cells from the data buffer and introduce a wait time for the header processing to compensate for the jitter of the packet. The jitter of the packet may include an aggregate jitter based on the first processing delay, queuing delay variation in the traffic manager, and the second processing delay. For example, queuing delay variation refers to the fluctuations in the time that data packets experience while waiting in queues within a network device, such as a switch or router, before being processed or transmitted. These variations may occur due to differing amounts of network traffic, varying processing times for different packets, and the dynamic nature of data flow through the network. Queuing delay variation can impact the overall latency and performance of the network by introducing inconsistencies in packet transmission times, which can lead to jitter, increased latency, and potential packet loss. Managing and minimizing queuing delay variation is crucial for maintaining efficient and reliable network communication. The second data path further may include a prebuffer check unit configured to accumulate enough cells and/or wait for enough time to ensure no underrun for transmitting the packet. Implementations of the described techniques may include hardware, a method or process, or computer software on a computer-accessible medium. For example, the term "prebuffer" refers to a temporary storage area or mechanism within a network switch used to hold data packets or their segments before they undergo final processing or transmission. As an example, the term "prebuffer check" refers to a process of verifying and ensuring that the prebuffer contains a sufficient amount of data, with correctly spaced and aligned packet segments, before the data is transmitted. Depending on the implementation, a prebuffer check unit can be implemented using various hardware and/or software components.

Another general aspect of the subject technology includes a method for reducing latency in a network switch. The method also includes receiving a packet having a header and a payload at an ingress port. The method also includes obtaining the header from the payload. The method also includes processing the header to determine a packet type and destination. The method also includes bypassing cells of the payload during an ingress packet processing to mask the first jitter associated with the ingress packet processing. The method also includes receiving the packet by a traffic manager, where the traffic manager may include a cell control path and a packet control path. The method also includes transmitting a control bus via the cell control path before transmitting a data bus to mask the jitter of the packet associated with delays of the packet control path and the cell control path. The method also includes sending the packet to an egress port, where control signals carried by the control bus are processed earlier while the cells of the payload are stored until the data bus arrives. The method also includes compensating for the jitter observed at the egress port to transmit the packet after an egress packet processing completes. For example, the term "compensating," in the context of jitter compensation, refers to the actions or mechanisms employed to counteract or mitigate the variations in packet arrival times (known as jitter) within a network switch. Other embodiments of this aspect include corresponding computer systems, apparatus, and computer programs recorded on one or more computer storage devices, each configured to perform the actions of the methods.

Implementations may include one or more of the following features. The method includes allowing a first set of cells ranging from one to the entire packet to bypass delays associated with the ingress processing for the header and merging the first set of cells at an input of the traffic manager with subsequent cells of the packet through the ingress packet processing. The method may include managing the storage of the cells of the payload in a data buffer based on the timing of the cells and managing a delay for accessing the data buffer based on a read request signal carried by the control bus. The egress packet processing includes receiving the control bus early from the traffic manager to set up timing and order for the cells; causing the data bus carrying the header and the payload to the egress port to initiate header processing; accumulating the cells of the payload by obtaining the cells stored in the data buffer once the header processing is complete; determining jitter of the packet at an end of the egress packet processing; and performing prebuffer checks based on cell spacing information carried by the control bus to ensure that enough cells are accumulated and correctly spaced and aligned for transmission without gaps. Determining the jitter of the packet may include managing the accumulation of the cells from the data buffer and checking packet delays associated with the egress packet processing.

Yet another general aspect of the subject technology includes a network switch configured to optimize packet transmission latency. The network switch also includes a first data path configured to process incoming packets. The switch also includes a traffic manager configured to handle packet buffering and switching. The switch also includes a second data path configured to compensate for the jitter observed by either accumulating bytes based on data read requests or waiting for a jitter compensation period. The switch also includes a control unit associated with the second data path configured to determine the jitter compensation period based on real-time observations and a worst-case jitter obtained by statistical analysis. The switch also includes a processing unit configured to perform a final packet processing and parallelize the jitter compensation period with a delay of the final packet processing to eliminate additional wait time.

Implementations may include one or more of the following features. The control unit is configured to use a minimum jitter value between an aggregate jitter at an end of the final packet processing and the worst-case jitter obtained for various packet sizes and port speeds to reduce latency. The network switch may include a data buffer in the second data path configured to temporarily store payload cells, an egress pipeline configured to handle the final packet processing for the packet, and a prebuffer check unit configured to check cell spacing to be correct in association with the minimum jitter value before transmitting out the packet. For example, the term "data buffer" may refer to a temporary storage area used to hold data packets or segments of data packets within a network device.

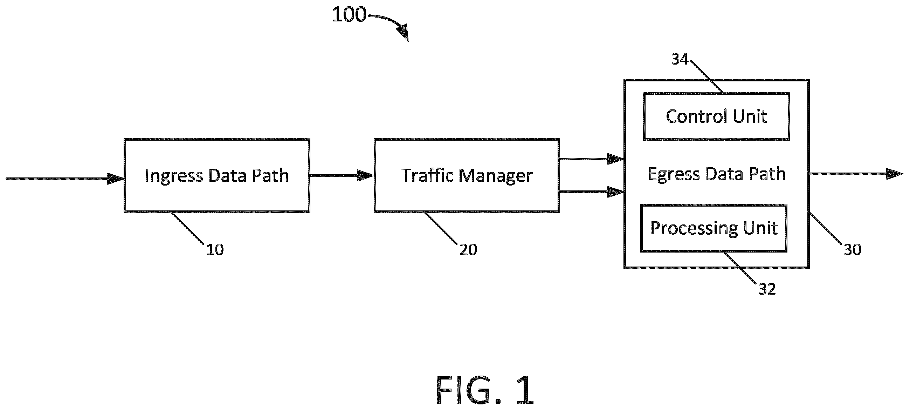

Figure 1 is a simplified block diagram of a network switch configured for low latency according to an embodiment of the subject technology. This diagram is merely an example, which should not unduly limit the scope of the claims. One of ordinary skill in the art would recognize many variations, alternatives, and modifications. Network switch 100 includes functional components configured to achieve low latency via packet data acceleration. A data packet refers to a formatted unit of data that is transmitted over a network. Each packet may contain a header and a payload. The header is a segment at the beginning of the data packet containing control information needed for routing and managing the packet. This information often includes the source address (the origin address of the packet), destination address (the target address where the packet is headed), protocol information, packet number, checksum (error-checking data to ensure the integrity of the packet), and length (information about the length of the header and sometimes the entire packet). The payload is the actual data or content that the packet is carrying. The payload is often organized into smaller segments or units known as cells, which break down the payload into manageable bytes that facilitate transmission, error checking, and reassembly. For example, the term "network switch" refers to a device that connects multiple devices and uses packet switching to forward data to its destination. Among other features, a network switch may be configured to facilitate communication between connected devices by processing and forwarding data packets while managing traffic to optimize network performance and reduce latency.

In an embodiment, the network switch 100 includes a first data path 10 coupled to an ingress or input port to receive incoming packets. For example, the term "data path" refers to the route or sequence of components and processes through which data packets, including their headers and payloads, travel within a network switch, and the term "control path" refers to the route or sequence of components and processes responsible for managing control signals within a network switch. For example, a route refers to the path or direction that a data packet follows from its source to its destination within a network. After undergoing an ingress processing to determine the type of the packet and where it needs to be sent, the packet is sent to a traffic manager 20. The traffic manager 20 is configured to store the packets in memory buffers (or queued) after performing an admission control. The packets are then directed to a second data path 30 (also referred to as an egress data path coupled to an egress or output port) for further processing and preparing to switch to an appropriate destination. The second data path 30 is responsible for the final stage of processing before the packet is transmitted out of the switch. The second data path 30 includes a control unit 34 configured to provide a jitter compensation to absorb the jitter observed in the final stage of processing. The second data path 30 also includes a processing unit 32 configured to parallelize a jitter compensation period (with the cell spacing information being obtained in advance of the cell data) with a process delay of the final packet processing to eliminate additional wait time for aligning the cells of the packet with minimized variations before transmitting it. Additional egress packet processing may be done after the packet has been switched. Miscellaneous functions like packet editing and timestamping may be performed here.

For all the functions in the three functional components of the network switch 100, the entire packet is not needed for the respective processing. For example, the packet header can be treated as a separate stream, allowing the rest of the packet to wait while the header is being processed. The latency of a packet through a switch is typically determined by the packet processing latency path and the prebuffer time before the packet can start transmitting. Ideally, packet cells arrive at a line rate, and the packet can be sent out after processing is completed. However, several sources of jitter, including the variability in packet delay as data packets traverse the network, can alter the spacing between the cells of a packet.

Jitter refers to differences in latency between packets in the same data stream. Ideally, cells of a packet should arrive at their destination at regular intervals; however, due to the dynamic nature of network traffic and varying load on network components, these intervals can fluctuate. Any time these intervals are faster or slower than the ideal spacing, that is jitter. This jitter or variability of the packets during network switching can lead to issues such as packet loss, out-of-order packet delivery, and degraded performance of time-sensitive applications. To prevent underrun in the data path, jitter must be accounted for. Traditionally, this means waiting for a certain amount of time or accumulating enough bytes of the packet before sending it out of the switch. With the increased complexity of modern high-bandwidth switches, the sources and magnitude of jitter have increased, resulting in increased latency.

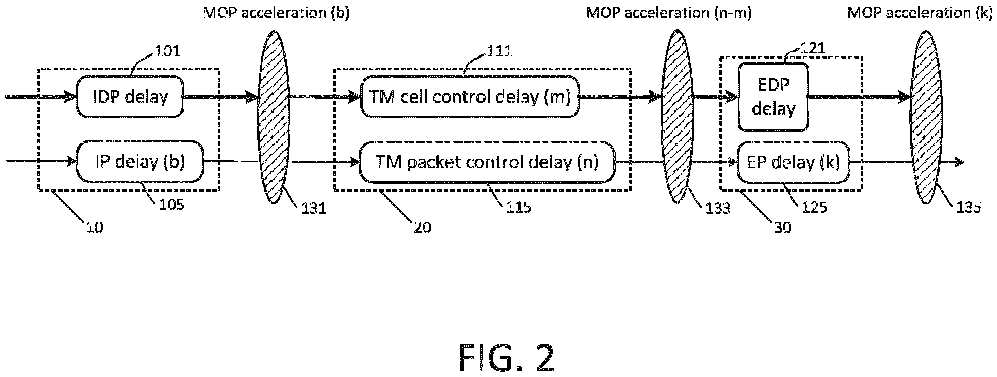

Network switch 100 is designed to provide packet acceleration in each of its three processing components: a first data path 10, traffic manager 20, and a second data path 30. This acceleration masks the jitter encountered during each processing stage, thus achieving low latency for the network switch. Figure 2 shows a simplified block diagram illustrating the functions of each of these three processing components in the network switch according to an embodiment of the subject technology.

As shown in Figure 2, in an embodiment, the first data path (10) of network switch 100 is configured to separate the header from the payload of a packet and use a bypass for payload cells to avoid ingress processing delays associated with the header. For example, the term "processing delay" refers to the time interval required for a network switch or any processing unit within the network switch to execute specific operations on data packets or their components. The packet header undergoes ingress packet (IP) processing to determine the packet type and its destination, represented by the IP delay (b) 105, specifically associated with processing the packet header. For example, the term "ingress" refers to the point or process through which data packets enter a network switch or network system. As an example, the term "packet type" refers to the classification or category of a data packet based on its structure, contents, or intended purpose within a network.

By introducing a bypass mechanism in the first data path (10), the payload cells can be processed separately, allowing at least some of these cells to avoid IP delay. For instance, several initial cells arriving at the first data path (10) can bypass the IP delay 105 by taking a shorter path with IDP delay 101 to quickly reach the traffic manager (20). This shorter path allows initial cells to circumvent some of the processing delays linked to full header processing.

Here, delay (b) refers to the extra time associated with the IP delay 105 compared to the shorter IDP delay 101. Alternatively, delay (b) refers to the time saved by processing cells through the first data path (10), achieving a first stage of middle-of-packet (MOP) acceleration 131. The shorter IDP delay 101 helps reduce the variability in the arrival times of the initial cells. By getting these cells to the traffic manager earlier, the system can better manage and align subsequent cells, mitigating jitter.

Any jitter encountered during ingress packet processing for the header can be masked as the initial cells bypass the ingress processing delay, reducing the overall latency of the network switch 100.

Initial cells are the first few fragments or segments of a packet that are prioritized or processed differently to expedite subsequent stages of packet handling, such as switching or forwarding. Typically, the initial cells consist of the first cell up to cells of the entire packet, carrying key header information that enables the early stages of processing to begin. For example, in an Ethernet frame, the initial cells might include the media access control (MAC) header and the first part of the payload containing critical information for routing decisions.

These initial cells can bypass the IP delay (105) to reach the traffic manager (20) earlier, allowing it to start processing control signals related to the packet's routing, Quality of Service (QoS), and other control functions. However, not all cells can bypass the full IP delay because the entire header must be fully processed to ensure accurate and secure packet handling. Subsequent cells after the initial cells still undergo full header processing, encountering a longer IP delay.

The traffic manager (20) can only start full operation on packet switching after the complete IP processing of the packet header is finished. Thus, there is a merge point where the initial cells and the subsequent cells converge at the input of the traffic manager (20), aligning all cells for further switching operations. This alignment at the merge point allows for efficient processing of packets, reducing jitter and latency, and ensuring smooth data flow through the network switch. For example, the term "merge" refers to the process of combining or bringing together multiple data streams or packet segments at a specific point within a network device. In this context, the merge point is where the initial cells of a packet, which have bypassed certain processing delays, and subsequent cells, which have undergone complete processing, converge at the input of the traffic manager.

While the initial cells wait for the subsequent cells, the traffic manager can already begin parallel processing tasks that do not require the full packet to be present. For example, the traffic manager can start scheduling, buffer management, and preliminary routing decisions. This overlap reduces overall latency by enabling the traffic manager to perform certain tasks in parallel rather than sequentially.

Referring to Figure 2, in an embodiment, the traffic manager (20) is configured to have a first control path to transmit a control bus carrying control signals for individual cells and a second control path to transmit a data bus carrying the header and the payload. In other words, the packet is split into two separate paths for handling control signals and data: the first control path being a cell control path 111 and the second control path being a packet control path 115. These paths ensure efficient management of packet processing, reducing latency and jitter. The cell control path carries the control bus, which transmits control signals for individual packet cells. These control signals manage the timing, order, and coordination of the packet cells. For example, traffic manager (20) uses control signals via the cell control path to process individual cells, to ensure correct timing, order, and storage of the cells in buffers. This cell control process is associated with a cell control delay denoted as (m).

The packet control path carries the data bus, which includes the actual packet data consisting of the packet header and payload cells. The data bus follows the control bus after the control signals have set up the necessary conditions for data handling. In an embodiment, the traffic manager (20) uses these control signals via the packet control path to manage packet-level control operations, such as routing decisions and QoS policies. This packet control process is associated with a delay denoted as (n).

Referring to Figure 2, it is shown that delay (n) is greater than delay (m), resulting in a second stage of MOP acceleration 133. This illustrates the acceleration between the cell control path 111 and the packet control path 115 within the traffic manager (20). The early transmission of the control bus masks the delay associated with the data bus, helping to reduce jitter at this stage. One significant source of jitter is the delay in accessing data from deep memory, which is typically quite long.

The control bus is sent out of the traffic manager (20) before the data bus towards the second data path (30), ensuring that all necessary control operations are completed in advance, thereby reducing latency. By separating the control bus and data bus into two distinct paths, the traffic manager can manage packet processing more efficiently. This separation reduces latency and jitter, ensuring smooth packet flow through the network switch.

Referring to Figure 2, the second data path (30) is configured to receive the control bus and the data bus separately. In an embodiment, the second data path (30) is configured to receive the control bus with control signals earlier than the data bus arrival to set up timing and order for the cells as well as to manage the storage of the cells in buffers. This early transmission of the control bus allows the second data path (30) to set up the necessary control conditions for the packet cells, encountering an EDP delay 121 for the time taken during the process. Upon arrival at the second data path (30), these control signals ensure that the packet data including the header and the cells of the payload are temporarily stored in a buffer storage. This buffer storage is essential to hold the cells temporarily until the data processing is ready. In another embodiment, the second data path (30) is configured to receive the data bus later from the traffic manager (20) to initiate an egress pipeline (EP) processing for the header while the packet cells are stored in the data buffer temporarily until the EP processing for the header is complete. For example, the term "egress" refers to the point or process through which data packets exit a network switch or network system. An EP delay (k) 125 is associated with the EP processing of the header in the egress pipeline. Here, delay (k) refers to a final stage of MOP acceleration that occurs at the second data path (30). In the second data path (30), the network switch 100 can compensate for any observed jitter before the packet transmission starts, ensuring that the packet can be sent out without gaps after the EP processing for the header is complete.

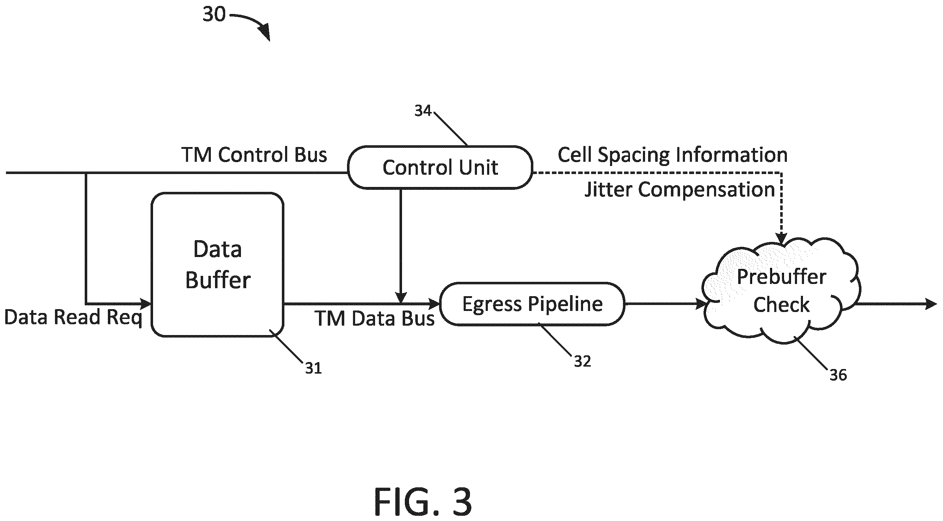

Figure 3 is a simplified block diagram illustrating the functions of the second data path in a network switch, according to an embodiment of the subject technology. In this embodiment, the second data path 30 features two separate processing paths: one for the control bus and one for the data bus. When a packet arrives at the second data path 30 from the traffic manager (TM), the control and data paths are separated to enhance efficiency.

The control signals are processed first, ensuring that all necessary preparations for data handling are in place. This separation allows for more efficient handling and masking of jitter, thereby reducing overall latency. Specifically, the TM control bus transmits control signals early to set up the necessary conditions for data transmission. By transmitting control information ahead of the data bus, this early transmission helps to mask jitter by ensuring that all control operations are in place before the data arrives.

The data bus then transmits the packet data to the second data path, initiating final packet processing in the egress pipeline 32. This processing involves a delay as the packet header and payload undergo final modifications, such as packet editing and error checking, before transmission. During this time, the packet data, including both the header and payload, is temporarily stored in data buffer 31 until control bus operations are complete.

Using buffers to temporarily store packet data allows the switch to absorb variations in packet arrival times. For example, data buffer 31 receives data read request signals to manage data retrieval, controlling the accumulation and timing of cells (or bytes) from the buffer to the data bus once header processing is complete.

Additionally, the second data path 30 is configured to introduce wait times or predictable delays, such as those in the egress pipeline 32, to help mask the effects of jitter. A fixed processing delay in the egress pipeline for the header provides a buffer period during which any earlier-introduced jitter can be evened out. This ensures smooth and reliable packet transmission with minimal latency.

In an embodiment, the second data path 30 includes a control unit 34 (as shown in Figure 1) designed to compensate for any jitter observed at the end of egress packet processing before transmitting the packet. Control unit 34 utilizes the TM control bus to send cell spacing information to a prebuffer check unit 36. Before transmitting a packet, switches perform prebuffer checks to ensure that sufficient packet data is available, managing the accumulation of cells (or bytes) from the data buffer 31 into the data bus to avoid underruns. The control unit manages the timing and spacing of the retrieved cells at the end of the second data path.

Simultaneously, the egress pipeline 32 introduces a fixed delay associated with the final processing of the packet. This delay, combined with buffered storage and retrieval, absorbs any remaining jitter from previous stages. The jitter, aggregated from the first stage MOP delay during ingress processing, second stage MOP delay associated with queuing delays and scheduling variations in the traffic manager, and final stage MOP delay during egress processing, is also observed at the end of the packet processing. Optionally, the determination of the jitter at the end may be triggered by an end-of-processing (EOP) signal. The network switch ensures that the packet waits just enough for its jitter to be compensated before transmission.

Control unit 34 determines the jitter compensation period based on real-time observations and the worst-case jitter any packet can encounter obtained through statistical analysis. One approach is to use the minimum value between the aggregate jitter at the end of the final processing and the worst-case jitter, optimizing latency for various packet sizes and port speeds. For large packet sizes on slower port speeds, it may cost less latency to just use the static jitter value rather than waiting for the entire packet to arrive serially and measure the exact jitter. The observed jitter through the life of a packet is added up and the second data path needs to either accumulate enough bytes or wait in terms of time to compensate for that jitter amount. Optionally, a combination of byte accumulation and wait time to optimize the jitter compensation is implemented for various types of observed jitter. The prebuffer check unit 36 verifies correct cell spacing to allow the packet to wait just enough for the minimum jitter value to be compensated for before the switch can start transmitting the packet.

In another embodiment, the second data path 30 can use the control unit 34 to compensate for the jitter observed by waiting for the entire packet to arrive serially in this jitter compensation period. Also, the processing unit 32 is configured to perform the final egress packet processing and parallelize the jitter compensation period with an introduced delay (or wait time) of the final processing to eliminate additional wait time before transmitting the packet. This delay acts as a final smoothing mechanism, ensuring that packets are transmitted at consistent intervals.

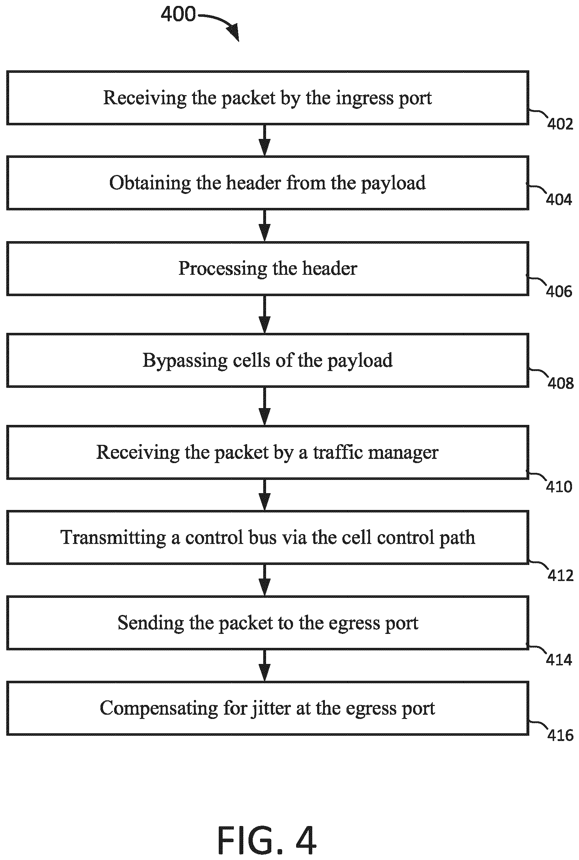

Figure 4 is a flow chart illustrating method 400 for reducing network switch latency according to an embodiment of the subject technology. This diagram is merely an example and should not unduly limit the scope of the claims. One of ordinary skill in the art would recognize many variations, alternatives, and modifications. In some embodiments, the network switch 100 in FIG. 1 is configured to execute method 400 for managing intra-packet acceleration for reducing latency in high-speed (Ethernet) network communication. Method 400 comprises multiple different steps. These steps may not be limited to a certain order as shown in the flow chart. Some steps may be performed before or after others. Other steps may be inserted or removed depending on applications.

In an embodiment, method 400 includes step 402 for receiving the packet by the ingress port of a network switch (e.g., network switch 100). The process begins with receiving a packet at an ingress port of the network switch. Each packet comprises a header and a payload, both essential for ensuring accurate routing and data delivery. The ingress port acts as the entry point, capturing the incoming packet and preparing it for initial processing. Method 400 also includes step 404 for obtaining the header from the payload of the packet. Once the packet is received, the next step involves separating the header from the payload. The header contains information such as the packet's source and destination addresses, while the payload contains the actual data to be transmitted. This separation allows for more focused and efficient processing of the packet's routing and control information.

Referring to Figure 4, method 400 also includes step 406 for processing the header. After separating the header from the payload, the header undergoes processing to determine the packet type and its destination. This step involves reading and interpreting the header information to make routing decisions, ensuring that the packet is directed correctly through the network switch toward its intended destination. Method 400 may include step 408 for bypassing cells of the payload and some ingress packet processing for the header. To mask the jitter encountered during ingress packet processing, the cells of the payload may bypass some of the more time-consuming processing stages. By allowing payload cells to take a shorter path around the ingress packet processing, the method reduces variability in processing times, ensuring smoother and more predictable packet handling. Step 408 may include allowing initial cells of the packet to bypass delays associated with the ingress processing for the header. The initial cells may be the first few fragments or segments of a packet that are prioritized or processed differently to expedite the start of subsequent stages of packet handling, such as switching or forwarding. Typically, the initial cells may be the first cell up to all cells of the packet, sufficient to carry key header information and allow early stages of processing to commence. The method may include another step of merging the initial cells at an input of the traffic manager with subsequent cells of the packet through the ingress packet processing.

Referring to Figure 4, method 400 also includes step 410 for receiving by the traffic manager of the network switch. The packet, now processed at the ingress stage, is received by the traffic manager. The traffic manager is designed with two separate paths: a cell control path and a packet control path. These paths allow for specialized handling of control signals and data, optimizing the processing and routing of packets through the switch. Method 400 also includes step 412 for transmitting the control bus via the cell control path carrying control signals for managing the timing and storage of the cells. Optionally, the method may include a step of managing the storage of the cells of the payload in a data buffer based on the timing of the cells. Optionally, the method may include a step of managing a delay for accessing the data buffer based on a read request signal carried by the control bus. In a specific embodiment, within the traffic manager, control signals are transmitted via the cell control path before the data bus is transmitted. This early transmission of the control bus helps to mask the jitter encountered between the delays of the packet control path and the cell control path. By prioritizing control signal processing, the method ensures that data handling is well-coordinated and efficient.

Referring to Figure 4, method 400 also includes step 414 for sending the packet to the egress port of the network switch. The packet is then sent to an egress port, where it is prepared for transmission out of the switch. At this stage, control signals carried by the control bus are processed earlier, while the cells of the payload are temporarily stored until the data bus arrives. This staggered processing ensures that control operations are completed in advance, allowing for seamless and synchronized data transmission. In some embodiments, the method may include a step of receiving the control bus earlier than the data bus from the traffic manager to set up timing and order for the cells. The method may include a step of directing the data bus carrying the header and the payload to the egress port to initiate an egress pipeline processing for the header. This step may be parallelized with an operation of storing the cells of the payload in a data buffer temporarily until the egress pipeline processing for the header is complete. The method also may include a step of accumulating the cells of the payload by retrieving the cells stored in the data buffer once the egress pipeline processing for the header is complete. This step may be associated with the data buffer being configured to start the retrieving process upon receipt of a data read request signal sent from the traffic manager via the control bus.

Further, method 400 includes step 416 for compensating for jitter at the egress port. Step 416 may include determining the jitter of the packet at the end of the egress pipeline processing. Finally, the method compensates for any jitter observed at the egress port. By accounting for the variability in packet arrival times, the switch can transmit the packet after egress packet processing is complete. This compensation minimizes additional wait times and ensures that packets are transmitted with minimal latency, enhancing overall network performance. Furthermore, the method may include a step of performing prebuffer checks based on cell spacing information carried by the control bus to ensure that enough cells are accumulated, correctly spaced, and aligned for transmission without gaps. This method efficiently manages packet processing in a network switch by strategically handling control signals and data to reduce jitter and latency. By separating and prioritizing different aspects of packet handling, the switch can ensure smoother, more predictable, and timely transmission of data packets.

While the above is a full description of the specific embodiments, various modifications, alternative constructions, and equivalents may be used. Therefore, the above description and illustrations should not be taken as limiting the scope of the present invention which is defined by the appended claims.

## Claims

1. A network switch (100) comprising:
a first data path (10) configured to receive a packet and to separate a header from a payload of the packet, the first data path (10) being **characterized by** a first latency for cells of the payload, the first latency excluding a first processing delay associated with the header in second data path;
a controller comprising a first control path and a control bus, the control path and the control bus being configured for transmitting control signals for the cells, the controller further comprising a second control path for transmitting the header and the payload using at least the control bus, wherein the control bus is **characterized by** a higher priority than the data bus; and
a second data path (30) configured to receive data from the control bus and the data bus, the second data path (30) further being configured to store the cells of the payload for managing a timing of the cells and a second processing delay associated with the header in the second data path (30) before transmitting the packet.

2. The network switch (100) of claim 1, wherein the first data path (10) is configured to:
process the header to determine packet type and destination; and
provide a route for a first set of cells containing header information around the first processing delay allowing the controller to process control signals associated with the header information earlier.

3. The network switch (100) of claim 2, wherein the first set of cells comprises a number of cells ranging from one to a total number of cells of the packet arriving at the first data path (10);
in particular wherein the first data path (10) is configured to merge the first set of cells with subsequent cells having the first processing delay at an input of the controller.

4. The network switch (100) of any of claims 1 to 3, comprising at least one of the following features:
wherein the control bus carries control signals sent from the controller to the first data path (10) for managing storage of the cells of the payload in buffers;
wherein the second data path (30) is configured to receive the control bus with control signals earlier than the data bus to set up timing and order for the cells.

5. The network switch (100) of any of claims 1 to 4, wherein the second data path (30) comprises a data buffer configured to temporarily store the packet including the header and the cells of the payload.

6. The network switch (100) of claim 5, wherein the second data path (30) is configured to receive the data bus later from the controller to initiate a header processing while cells of the payload are stored in the data buffer temporarily until the header processing is complete.

7. The network switch (100) of claim 6, wherein the second data path (30) is configured to conduct an accumulation of the cells by retrieving the cells from the data buffer based on a data read request signal sent via the control bus.

8. The network switch (100) of claim 7, wherein the second data path (30) is configured to manage the accumulation of the cells from the data buffer and introduce a wait time for the header processing to compensate for jitter of the packet.

9. The network switch (100) of claim 8, wherein the jitter of the packet comprise an aggregate jitter based on the first processing delay, queuing delay variation in the traffic manager (20), and the second processing delay;
in particular wherein the second data path (30) further comprises a prebuffer check unit configured to accumulate enough cells or wait for enough time to ensure no underrun for transmitting the packet.

10. A method for reducing latency in a network switch (100) comprising:
receiving a packet having a header and a payload at an ingress port;
obtaining the header from the payload;
processing the header to determine a packet type and destination;
bypassing cells of the payload during an ingress packet processing to mask a first jitter associated with the ingress packet processing;
receiving the packet by a traffic manager (20), wherein the traffic manager (20) comprises a cell control path and a packet control path;
transmitting the packet using the cell control path before a data bus to mask a second jitter of the packet associated with delays of the packet control path and the cell control path;
sending the packet to an egress port, where control signals carried by the control bus are processed earlier while the cells of the payload are stored until the data bus arrives; and
compensating for jitters observed at the egress port to transmit the packet after an egress packet processing completes.

11. The method of claim 10, wherein the ingress packet processing comprises:
allowing a first set of cells ranging from one to the entire packet to bypass delays associated with the ingress processing for the header;
merging the first set of cells at an input of the traffic manager (20) with subsequent cells of the packet through the ingress packet processing.

12. The method of claim 10 or 11, further comprising:
managing storage of the cells of the payload in a data buffer based on the timing of the cells; and
managing a delay for accessing the data buffer based on a read request signal carried by the control bus.

13. The method of claim 12, wherein the egress packet processing includes:
receiving the control bus early from the traffic manager (20) to set up timing and order for the cells;
causing the data bus carrying the header and the payload to the egress port to initiate a header processing;
accumulating the cells of the payload by obtaining the cells stored in the data buffer once the header processing is complete;
determining jitter of the packet at an end of the egress packet processing; and
performing prebuffer checks based on cell spacing information carried by the control bus to ensure that enough cells are accumulated and correctly spaced and aligned for transmission without gaps;
in particular wherein determining jitter of the packet comprises managing accumulation of the cells from the data buffer and checking packet delays associated with the egress packet processing.

14. A network switch (100) comprising:
a first data path (10) configured to process incoming packets;
a traffic manager (20) configured to handle packet buffering and switching;
a second data path (30) configured to compensate for jitters observed by either accumulating bytes based on data read requests or waiting for a jitter compensation period;
a control unit associated with the second data path (30) configured to determine the jitter compensation period based on real-time observations and a worst-case jitter obtained by statical analysis; and
a processing unit (32) configured to perform a final packet processing and parallelize the jitter compensation period with a delay of the final packet processing to eliminate additional wait time.

15. The network switch (100) of claim 14, wherein the control unit is configured to use a minimum jitter value between an aggregate jitter at an end of the final packet processing and a worst-case jitter obtained for various packet sizes and port speeds to reduce latency;
in particular further comprising:
a data buffer in the second data path (30) configured to temporarily store payload cells;
an egress pipeline configured to handle the final packet processing for the packet; and
a prebuffer check unit configured to check cell spacing associated with the minimum jitter value.
